(19)

Europäisches
Patentamt
European
Patent Office
Office européen
des brevets

(11) **EP 3 065 093 A1**

(12) **EUROPEAN PATENT APPLICATION**

(43) Date of publication:
07.09.2016 Bulletin 2016/36

(51) Int Cl.:
*G06Q 10/02* (2012.01)   *G06Q 50/14* (2012.01)

(21) Application number: 15290060.1

(22) Date of filing: 06.03.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Amadeus S.A.S.**
**06410 Biot (FR)**

(72) Inventors:
• **Quilichini, Olivier**
**06220 Golfe Juan (FR)**
• **Roux-Clair, Clement**
**06600 Antibes (FR)**
• **Garnero, Paul**
**06390 Contes (FR)**
• **Patin, Jean-Marie**
**06810 Auribeau sur Siagne (FR)**
• **Sauvage, Jean-Michel**
**06400 Cannes (FR)**
• **Haug, Christophe**
**06560 Sophia Antipolis (FR)**

(74) Representative: **Samson & Partner Patentanwälte mbB**
**Widenmayerstraße 6**
**80538 München (DE)**

(54) **Generating a setting recommendation for a revenue management system**

(57)   Methods, systems, and computer program products for generating a setting recommendation to configure a revenue management system of a travel provider. The setting recommendation may be generated by collecting data from a articles provided by data sources associated with a given market. Each article may be compared to a filter in a set of filters to determine whether the article meets a criterion of the filter. If an article meets the criterion of a filter, the article may be parsed and data may be selectively collected for use in forecasting a future event regarding the given market. A recommended action may be generated based on the future event. Information regarding the recommended action, the filter, the article, and the future event may be provided in a setting recommendation for use in updating a system setting in an effort to address the effect of the future event.

FIG. 1

EP 3 065 093 A1

**Description**

TECHNICAL FIELD

The invention generally relates to computers, databases, and computer systems and, in particular, to methods, systems, and computer program products for generating a setting recommendation for a revenue management system.

BACKGROUND

Inventory and revenue management of limited resources of service industries that are, at one moment, lost if not sold, is a challenge in many service industries. For example, in the travel industry, service components such as hotels and airplane flights have limited resources (e.g., a fixed number of hotel rooms or a fixed number of seats), and as such, when a hotel room or a seat on an airplane flight goes unused, that unused resource represents a loss of revenue to a travel provider. Nonetheless, it is often the case that some resources that are booked or purchased by a customer will not be used, e.g., due to a cancelation by the customer or a change in the customer's itinerary. Business customers in particular may be subject to changing circumstances that may require changes in their travel plans. To account for the possibility that some booked resources will go unused, resources may be intentionally overbooked with the goal of optimizing resource usage; however, doing so also comes with the potential detriment to goodwill and increased costs associated with accommodating customers when all customers cannot be accommodated by the available resources.

Inventory and revenue management systems in some service industries, in an attempt to optimize resource usage as well as optimize revenue, employ revenue-driven and technically complex functionality referred to as revenue management or yield management. For example, some inventory management systems incorporate revenue management systems that include forecasting and optimization functionality, with the former used to forecast or predict future demand, and the latter used to optimize availability (e.g., how much of a resource, e.g., a seat on a flight, will be offered at different price points). A component of future demand may be events or situations that arise in the world, and that may affect the underlying business or some component thereof, which changes the demand for booking a fare along a particular flight. However, such events or situations are generally not considered in an automated way in conventional revenue-based demand assessments.

Improved methods, systems, and computer program products for generating a setting recommendation for a revenue management system are needed.

SUMMARY

In an embodiment of the invention, a method is provided for generating a setting recommendation to configure a revenue management system for a travel market of a travel provider. The method includes accessing a data source database to retrieve a plurality of data sources, wherein each data source in the plurality of data sources is associated with the travel market or a market encompassing the travel market in the data source database. The method further includes accessing a filter database to retrieve a filter from among a plurality of filters stored in the filter database, wherein each filter in the plurality of filters includes a filter criterion and a potential market effect and performing an electronic search of the plurality of data sources to retrieve a plurality of articles associated with the plurality of data sources. The method further includes applying the filter to the plurality of articles to extract an information item from an article in the plurality of articles, wherein the article meets the filter criterion of the filter and performing a database access to identify a recommended action associated with the potential market effect of the filter therein. The method further includes generating a setting recommendation based at least in part on the information item, wherein the setting recommendation includes the recommended action.

In another embodiment of the invention, a system is provided for generating a setting recommendation to configure a revenue management system for a travel market of a travel provider. The system comprises a processor and a memory including instructions that, when executed by the processor, cause the system to access a data source database to retrieve a plurality of data sources, wherein each data source in the plurality of data sources is associated with the travel market or a market encompassing the travel market in the data source database. The instructions further cause the system to access a filter database to retrieve a filter from among a plurality of filters stored in the filter database, wherein each filter in the plurality of filters includes a filter criterion and a potential market effect and perform an electronic search of the plurality of data sources to retrieve a plurality of articles associated with the plurality of data sources. The instructions further cause the system to apply the filter to the plurality of articles to extract an information item from an article in the plurality of articles, wherein the article meets the filter criterion of the filter and perform a database access to identify a recommended action associated with the potential market effect of the filter therein. The instructions further cause the system to generate a setting recommendation based at least in part on the information item, wherein the setting recommendation includes the recommended action.

In another embodiment of the invention, a computer program product is provided comprising a non-transitory computer-readable storage medium and instructions stored on the non-transitory computer-readable storage medium that, when executed by a processor, cause a computer to access a data source database to retrieve a plurality of data sources, wherein each data source in the plurality of data sources is associated with the travel market or a market encompassing the travel market in the data source database. The instructions further cause the computer to access a filter database to retrieve a filter from among a plurality of filters stored in the filter database, wherein each filter in the plurality of filters includes a filter criterion and a potential market effect and perform an electronic search of the plurality of data sources to retrieve a plurality of articles associated with the plurality of data sources. The instructions further cause the computer to apply the filter to the plurality of articles to extract an information item from an article in the plurality of articles, wherein the article meets the filter criterion of the filter and perform a database access to identify a recommended action associated with the potential market effect of the filter therein. The instructions further cause the computer to generate a setting recommendation based at least in part on the information item, wherein the setting recommendation includes the recommended action.

BRIEF DESCRIPTION OF THE SEVERAL VIEWS OF THE DRAWINGS

The accompanying drawings, that are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a revenue management system in communication with the World Wide Web via a network.

FIG. 2 is a diagrammatic view of an exemplary computer system of FIG. 1.

FIG. 3 is a diagrammatic view of an exemplary flow of data between a revenue management analyst, data sources, filters, pieces of information, and recommended actions.

FIG. 4 is a schematic view of a revenue management system, including a data source database, a filter database, an actions database, a calendar events database, and a historical demand database.

FIG. 5 is a graphical view of an exemplary data source table.

FIG. 6 is a graphical view of an exemplary refined data source table.

FIG. 7 is a graphical view of an exemplary filter table.

FIG. 8 is a graphical view of an exemplary actions table.

FIG. 9 is a graphical view of an exemplary blank piece of information.

FIG. 10 is a graphical view of an exemplary first piece of information populated with data extracted from a first article of a first data source and an exemplary second piece of information populated with data extracted from a second article from a second data source.

FIG. 11 is a graphical view of an exemplary piece of information populated with data from two merged pieces of information.

FIG. 12 is a graphical view of a setting recommendation populated with data.

FIG. 13 is a graphical view of an exemplary calendar events table.

FIG. 14 is a graphical view of an exemplary piece of information populated with data from the calendar events table.

FIG. 15 is a graphical view of an exemplary historical demand table.

FIG. 16 is a graphical view of an exemplary historical piece of information table.

FIG. 17 is a graphical view of an exemplary chart illustrating demand information over time.

FIG. 18 is a graphical view of an exemplary table illustrating average demands and changes in demands for an airport over time.

FIG. 19 is a graphical view of an exemplary set of actions and corresponding data flow between a revenue management analyst, a revenue management system, and an inventory system.

DETAILED DESCRIPTION

Embodiments of the invention are directed to methods and systems for generating a setting recommendation to configure a revenue management system. Embodiments of the invention may be implemented by one or more networked computers or servers. The networked computers may be operated by a Global Distribution System (GDS) and may provide processing and database functions for travel-related systems and modules.

The revenue management system may be configured to collect information regarding a specified market and to use this information to forecast events which may stimulate changes in the underlying business environment associated with the revenue management system. For example, based on collected information, the revenue management system may predict demand increases, demand decreases, or environmental disruptions. Based on the forecast events, the revenue management system may be configured to provide recommended actions to proactively neutralize or minimize the changes stimulated by the forecast events. Further, the revenue management system may incorporate a historical component into the formation of the recommended action to take previous demand changes or disruptions into consideration to more accurately formulate the appropriate recommended action.

The hereinafter-described embodiments will focus on an airline-oriented application in which a service component is an airplane flight, a travel vehicle is a plane, and the seats on that flight represent limited resources capable of being booked by customers, and potentially subject to no-shows, cancelations, or other itinerary changes that may result in a booked seat going unused by a customer at the time of departure of the flight. As such, the forecasting of the hereinafter-described embodiments attempts to predict the changes in the underlying business environment of an airline. For example, a forecast may relate to changes in demand for seats on a flight or potential cancellation of the flight entirely.

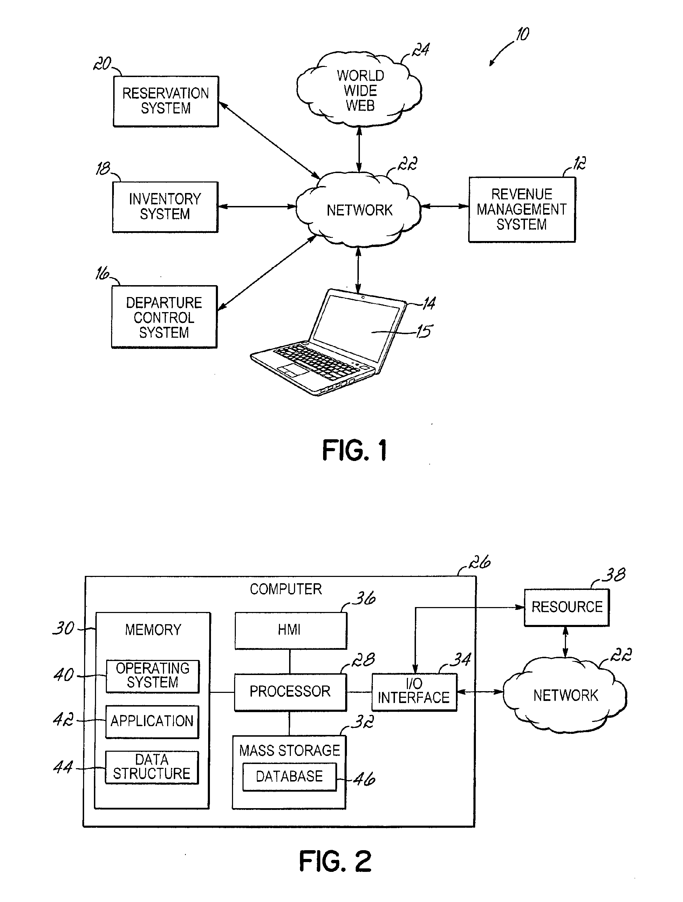

Referring now to FIG. 1, an operating environment 10 in accordance with an embodiment of the invention may include or reside within a revenue management system 12, which may be located at a global distribution system (GDS). In general, the revenue management system 12 operates to forecast travel demands along designated routes and incorporate the forecast travel demands into setting recommendations for adjustments to the price and inventory levels of the routes in an effort to maximize revenue. A revenue analyst may provide the revenue management system 12 with parameters and request a setting recommendation from the revenue management system 12 through a revenue analyst computing device 14 having a display screen 15.

Operating environment 10 may further include a departure control system 16, an inventory system 18, and a reservation system 20. The revenue management system 12, departure control system 16, inventory system 18, and reservation system 20 may communicate with each other through a network 22. Network 22 may include one or more private or public networks (e.g. the Internet) that enable the exchange of data. As such, the operating environment 10 may further include a source of data 24 through network 22, hereinafter referred to as the World Wide Web 24. As shown in FIG. 1, revenue analyst computing device 14 may communicate with the revenue management system 12 through network 22.

Referring now to FIG. 2, the revenue management system 12, revenue analyst computing device 14, departure control system 16, inventory system 18, reservation system 20, and World Wide Web (Internet) 24 of operating environment 10 may be implemented on one or more computing devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 22 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 22 or external resource 38. The application 42 may thereby work cooperatively with the network 22 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 22, such as a cloud computing service.

The HMI 36 may be operatively coupled to the processor 28 of computer system 26 in a known manner to allow a user to interact directly with the computer system 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

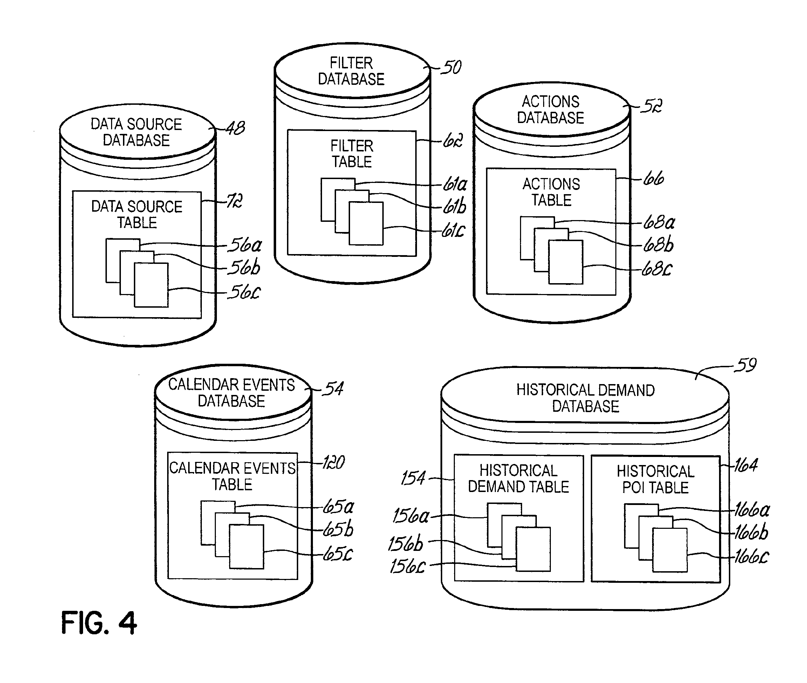

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. As shown in FIG. 4, in an embodiment of the invention, the database 46 may comprise a data source database 48, a filter database 50, an actions database 52, a calendar events database 54, a historical demand database 59, or a combination thereof.

Referring now to FIG. 1, the revenue management system 12 may coordinate with or utilize information stored or provided by one or more of the departure control system 16, inventory system 18, reservation system 20, World Wide Web 24, or any other suitable computer system, or combination thereof. The revenue management system 12, departure control system 16, the inventory system 18, and the reservation system 20 provide various travel provider services related to supporting and enhancing the operations of the travel provider. For example, the departure control system 16 provides information regarding successful departures, departure delays, and time and date information related thereto. Inventory system 18 provides information regarding the inventory and availability of the underlying travel provider, for example availability of seating or passage on an airline flight. The inventory system 18 may also provide information regarding the availability of hospitality providers such as hotels and car rentals. The reservation system 20 provides information regarding the passenger and the extended travel record associated with the passenger. This includes passenger information such as name, other travelers, the frequent flyer number, contact information, and trip information.

In general, the revenue management system 12 is configured to generate a setting recommendation for a revenue management analyst. The setting recommendation is generated by applying a set of filters to a set of data sources to generate pieces or items of information for use in determining the setting recommendation, which may thereafter be reviewed and applied by the revenue management analyst or may be automatically applied. Each piece of information or information item is compared to a set of recommended actions to determine the appropriate recommended action. The recommended action is thereby supplied in a setting recommendation along with data from the piece of information. Each setting recommendation is made with respect to a particular market. For example, a revenue management analyst may request a setting recommendation for the market of a city. The revenue management system 12 thereafter applies a set of filters to a set of data sources to filter out pieces of information associated with the city. These pieces of information are then used to determine a recommended action. Thereafter, the piece of information and the recommended action are compiled into a setting recommendation and provided to the revenue management analyst.

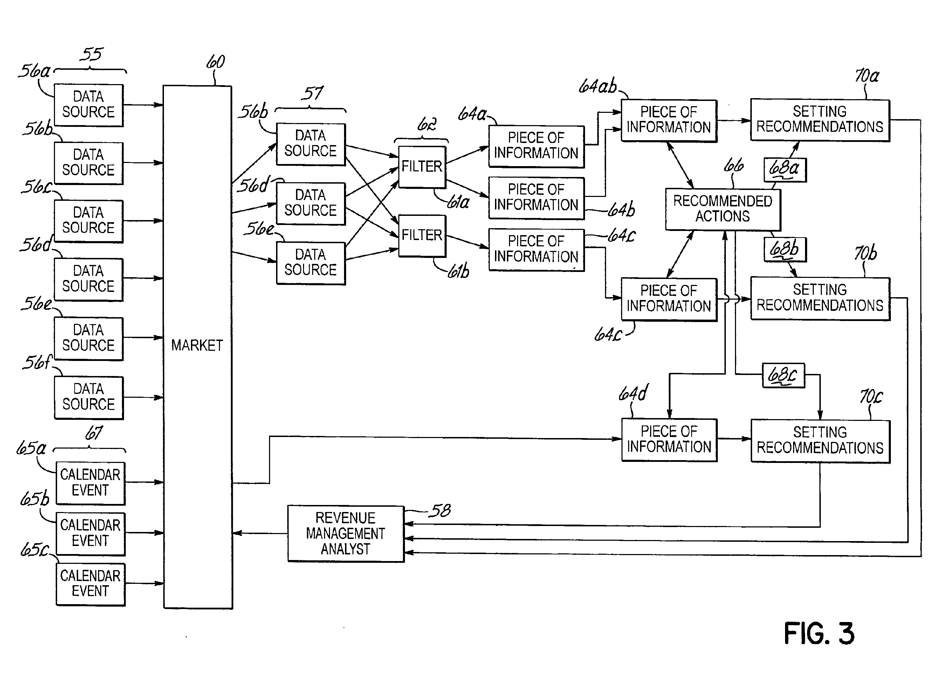

Referring now to FIGS. 1 and 3, a revenue management analyst 58 provides a market 60 which is used by revenue management system 12 to refine a set of data sources 55 into those that are either associated with market 60 or a market which includes market 60. For example, if market 60 is Nice, France, any data source 56 associated generally with the market of France is also included in a refined set of data sources 57 as the market of France encompasses the market of Nice. Thus, the set of data sources 55 is transformed into the refined set of data sources 57 containing only data sources 56 which are associated with market 60 or a market which includes market 60. Next, a piece of information 64 is extracted from a data source 56 by applying a filter 61 thereto. Each data source 56 in the set of refined data sources 57 is compared to each filter 61 in a set of filters 62 to determine whether a relevant piece of information 64 is provided by the underlying data source 56. Pieces of information 64 may also be generated from any article of a data source 56 which include the market 60 in the title or body of the article. Thus, market information may be identified and collected through a market keyword match in the title or body of an article in addition to associating each data source 56 with a market. Inasmuch as to data sources 56 may contain generally the same information, each piece of information 64 is compared to one another and any two pieces of information 64 which generally include the same information are merged into a single piece of information 64. For example, as shown in FIG. 3, piece of information 64A and piece of information 64B are merged into piece of information 64AB. Thereafter, each remaining piece of information 64 is compared with a set of recommended actions 66 to determine which recommended action 68 within the set of recommended actions 66 is most applicable to the underlying piece of information 64. Revenue management system 12 thereafter creates a setting recommendation 70 by incorporating information from the underlying piece of information 64 and the associated recommended action 68. The setting recommendation 70 may be formatted in a particularly useful format for the revenue management analyst 58 by incorporating convenient formatting or HTML hyperlinks into the setting recommendation 70. Each generated setting recommendation 70 is thereafter provided to the revenue management analyst 58 for use in configuring the revenue management system 12.

As shown in FIG. 3, the revenue management system 12 may further include one or more calendar events 65, combined into a set of calendar events 67 for use in generating pieces of information 64. Each calendar event 65 is associated with a market. The revenue management system 12 compares the market of each calendar event 65 to the market 60 provided by the revenue management analyst 58 to determine whether the particular calendar event 65 is relevant for providing the piece of information 64. If the market of the calendar event 65 is the same as market 60, or if market 60 is a sub-market of the market of calendar event 65, the revenue management system 12 generates the piece of information 64 from the matching calendar event 65. This piece of information 64 is thereafter used by revenue management system 12 as described above with respect to deriving a recommended action 68 therefrom.

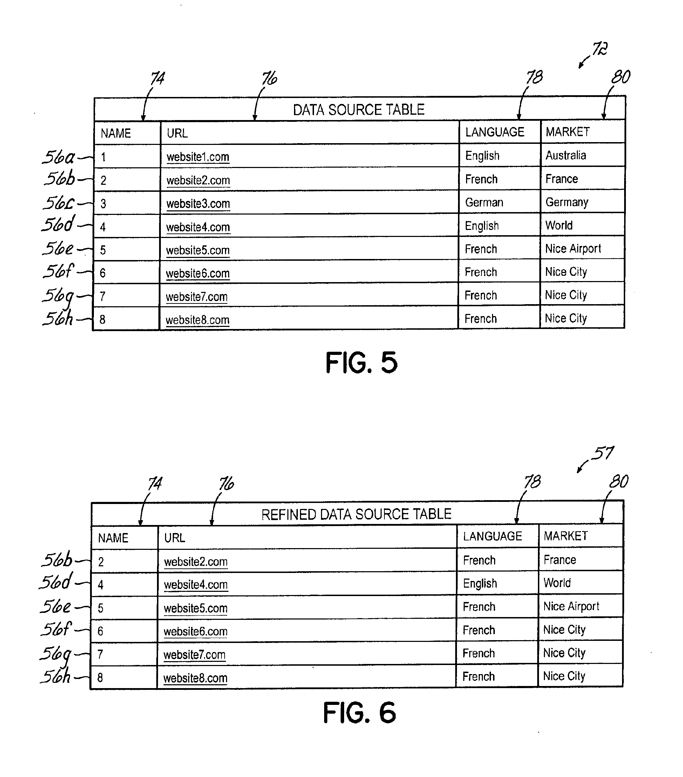

Referring to FIGS. 4-6, the revenue management system 12 may include the data source database 48 and may reference information stored therein for use in extracting data from the data sources 56. The data source database 48 is configured to include a data source table 72 that stores and maintains the set of data sources 55. A pseudo-database table representing data source table 72 is shown in FIG. 5. Data source table 72 may include multiple rows, with each row representing a particular data source 56. In the embodiment of the data source table 72 illustrated in FIG. 5, each data source 56 includes an identifier field 74, a uniform resource locator (URL) field 76, a language field 78, and a market field 80. Identifier field 74 contains a reference identifier for a data source 56. URL field 76 contains a web address for accessing the data source 56. Language field 78 contains the language in which the data source 56 is provided. Market field 80 contains the geographical area or location the data source 56 generally encompasses. For example, data source 56D may be the website of a news network located at the URL "website4.com" and may be identified or referenced as data source "4". According to data source table 72, data source 56D is transmitted in English and provides information and data encompassing the entire world market.

Inasmuch as each data source 56 is typically a news generating web site or a news aggregation service, the URL field 76 provides the web address of a "root directory" or a primary link to the entire catalog of data provided by the underlying data source 56. For example, data source 56D provides "website4.com" in the URL field 76. However, the revenue management system 12 crawls or navigates through the entire web site by searching through each web page or article residing at the specified domain. Thus, while one web address is provided for each data source 56, the revenue management system 12 compares each article or distinct web page derived from the main URL when filters 61 are applied to data sources 56. For example, inasmuch as "website4.com" is provided in URL field 76D for data source 56D, the revenue management system 12 compares each filter 61 in the set of filters 62 to the information provided at "website4.com". However, the revenue management system 12 also iterates through all of the web pages at the domain and compares each filter 61 to the information provided in each web page. Distinct web pages at a data source 56 will hereinafter be referred to as articles. For example, the revenue management system 12 compares each filter 61 to a first article located at "website4.com/article_1.html" as well as a second article located at "website4.com/article_2.html". Depending on the data provided therein, the first article may satisfy the criteria of one filter 61 while the second article may satisfy the criteria of a different filter 61.

As shown in FIG. 6, data source table 72 may be refined into a refined data source table 82 containing only rows of data sources 56 that match a given market, such as any data sources 56 containing "NICE CITY" in the market field 80. Refined data source table 82 may be an intermediate or dynamically created table for use in responding to a particular setting recommendation request by the revenue management analyst 58. As such, data source table 72 generally represents the set of data sources 55 shown in FIG. 3, while refined data source table 82 generally represents the refined set of data sources 57 shown in FIG. 3.

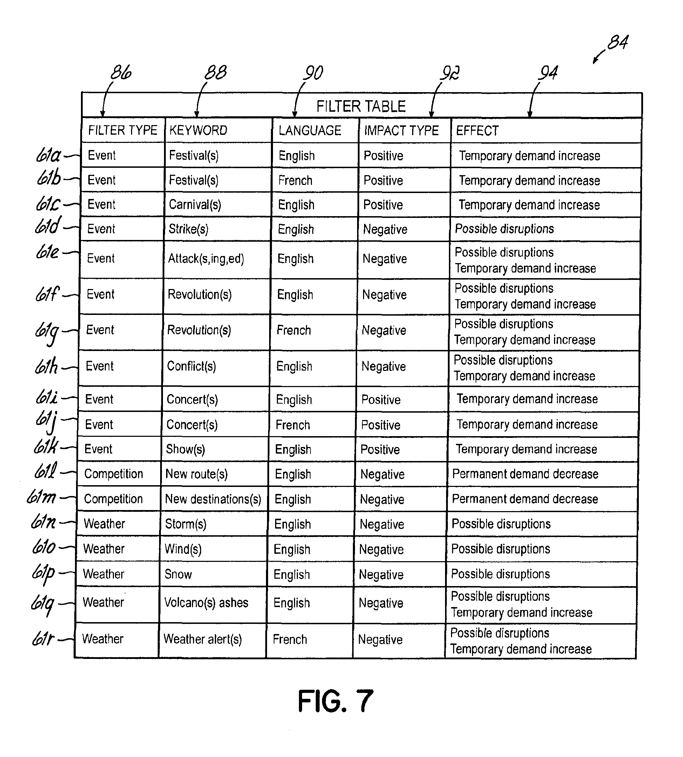

Referring to FIGS. 4 and 7, the revenue management system 12 may include the filter database 50 and may reference information stored therein for use in filtering pieces of information 64 from data sources 56. The data source database 48 is configured to include a filter table 84 that stores and maintains the set of filters 62. A pseudo-database table representing filter table 84 is shown in FIG. 6. Filter table 84 may include multiple rows, with each row representing a particular filter 61. In the embodiment of the filter table 84 illustrated in FIG. 6, each filter 61 includes a filter type field 86, a keyword field 88, a language field 90, an impact type field 92, and an effect field 94. Filter type field 86 contains information regarding the subject or style of the underlying filter 61. For example, values contained in filter type field 86 may indicate the associated filter 61 is an "event" related filter 61, a "competition" related filter 61, or a "weather" related filter 61. Keyword field 88 contains a word or phrase which may be used as a filter criterion for determining whether the filter 61 is applicable to an article of the underlying data source 56. For example, filter 61A is applicable if a particular article of an underlying data source 56 includes the keyword "Festival", which is found in keyword field 88A. Language field 90 contains a language reference which may be used to match data sources 56 and filters 61 having the same language.

Impact type field 92 of filter table 84 includes information regarding whether a match between a data source 56 and the underlying filter 61 forecasts a positive or good future situation or whether a match forecasts a negative or bad future situation. The information contained in the impact type field 92 is generally expressed from the perspective of the underlying business associated with the revenue management system 12 and is an abstraction of the information contained in the effect field 94. The effect field 94 includes information regarding the potential impact of finding a data source 56 which matches the particular filter 61. For example, if a particular article at data source 56 includes the keyword "Strike", the article at data source 56 will match filter 61D. The impact type field 92D of filter 61D forecasts a negative impact on the underlying business associated with the revenue management system 12 and that the negative impact is attributable to possible disruptions in the business associated with the revenue management system 12.

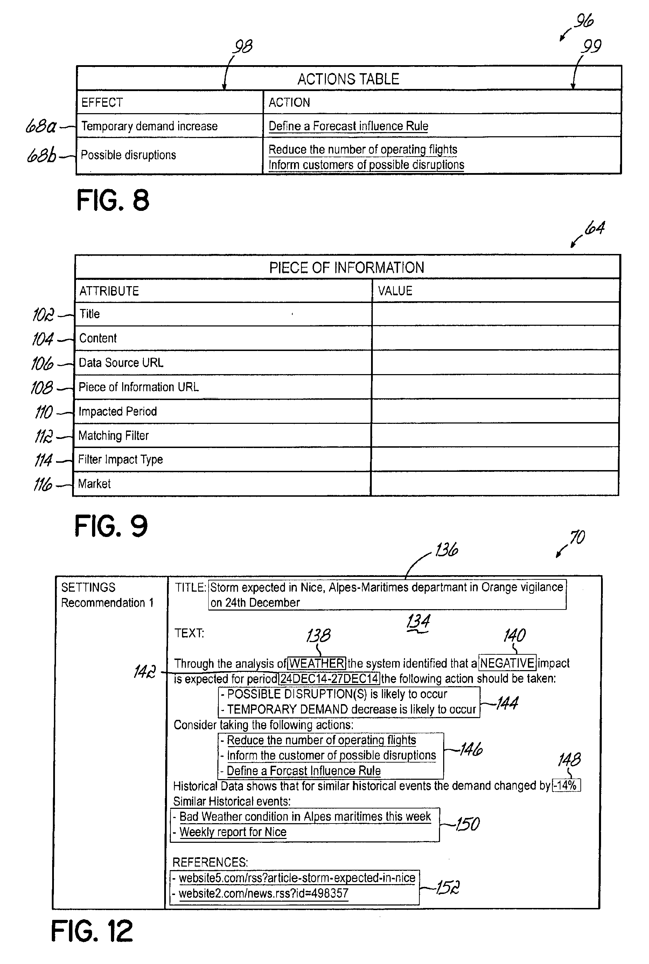

Referring to FIGS. 4 and 8, the revenue management system 12 may include the actions database 52 and may reference information stored therein for use in determining recommended actions to take to address a particular forecast effect on the business associated with the revenue management system 12. While actions database 52 is shown as a distinct element within revenue management system 12, actions database 52 may be incorporated into another database such as filter database 50 or may be combined with another database table to store the underlying action data. The actions database 52 is configured to include an actions table 96 that stores and maintains the set of recommended actions 66. A pseudo-database table representing actions table 96 is shown in FIG. 8. Actions table 96 may include multiple rows, with each row representing a particular recommended action 68. In the embodiment of the actions table 96 illustrated in FIG. 8, each recommended action 68 includes an effect field 98 and an action field 99. Each entry in the effects field 98 generally correlates to the effect field 94 of the filter table 84. As such, the effects field 94 of the filter table 84 may act as a reference key to associate an entry or row in the filter table 84 with a corresponding entry or row in the actions table 96 having a matching entry in the effects field 98. The action field 99 includes one or more recommended actions to take to address the associated effect found in effect field 98. For example, if effect field 96B of recommended action 68B indicates the business may experience possible disruptions, the corresponding action field 99B recommends taking action to "reduce the number of operating flights" and "inform customers of possible disruptions". These two actions may counteract the effect of possible disruptions on the underlying business. Thus, if a particular filter 61 extracts relevant data from a particular data source 56, revenue management system 12 may use the data source 56 and the filter 61 to forecast a future effect on the business and can generate recommended actions 68 to institute in order to properly address the forecast future event.

FIGS. 9-11 illustrate one representation of a piece of information 64 generated through determining an article at a particular data source 56 satisfies the filter criterion stored in keyword field 88 of a particular filter 61. Each piece of information 64 generally includes a plurality of attribute/value pairs which corresponds to information extracted from the underlying article. The extracted information is relevant for generating a setting recommendation 70 for use by the revenue management analyst 58 and revenue management system 12 and includes information such as the article title, URL, matching filter information, and market information associated with the article title, the text of the article, the data source 56, or a combination thereof. As shown in FIG. 9, the piece of information 64 includes a title field 102, a content field 104, a data source URL field 106, a piece of information URL field 108, an impacted period field 110, a matching filter field 112, a filter impact type field 114, and a market field 116.

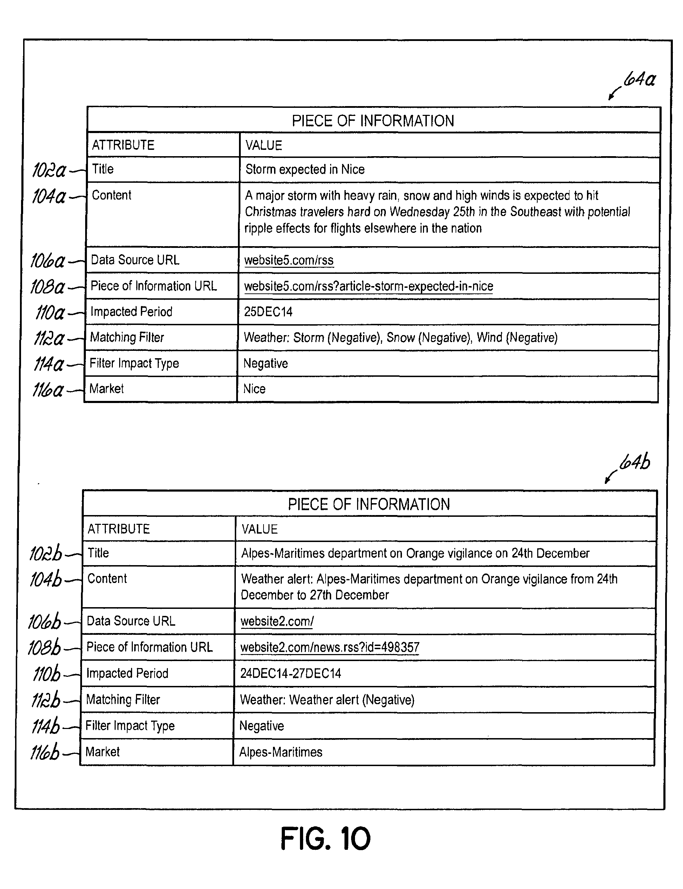

FIG. 10 provides an example of the type of information contained in a piece of information 70. The information contained in the piece of information 64A indicates that the piece of information 64A was derived from an article found at the URL "www.nice.aeroport.fr/rss?article=storm-expected-in-nice". Further, information contained in the piece of information 64A indicates that the piece of information 64A was generated from filter 61N, as indicated by the entry "Storm (Negative)" in matching filter field 112A. As shown in FIG. 7 with respect to filter 61N, "Storm" matches keyword field 88N and "Negative" matches impact type field 92N. Thus, piece of information 64A was generated by filter 61N because the underlying article included the word "storm" or "storms." Matching filter field 112A further indicates that the piece of information 64 met the filter criterion of two additional filters, namely, filter 61P as indicated by "Snow (Negative")" and filter 61O as indicated by "Wind (Negative")".

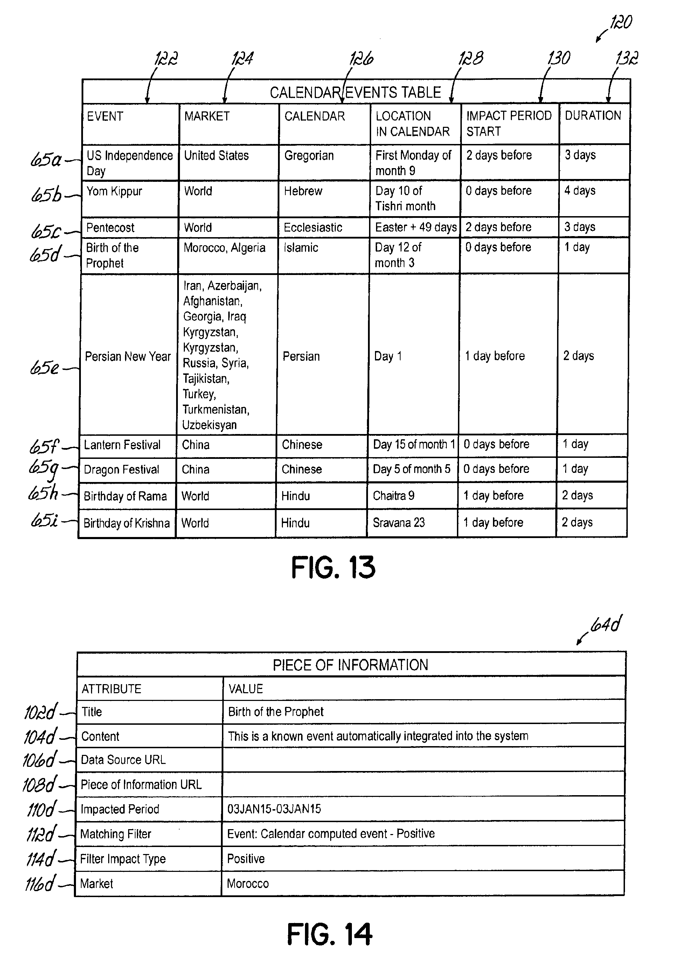

Referring to FIGS. 3, 4, and 13, the revenue management system 12 may include the calendar events database 54 and may reference information stored therein for use in extracting data from the set of calendar events 67. The calendar events database 54 is configured to include a calendar events table 120 that stores and maintains the set of calendar events 67. A pseudo-database table representing calendar events table 120 is shown in FIG. 13. Calendar events table 120 may include multiple rows, with each row representing a particular calendar event 65. In the embodiment of the calendar event table 120 illustrated in FIG. 13, each calendar event 65 includes an event identifier field 122, a market field 124, a calendar field 126, a location in calendar field 128, an impact period start field 130, and a duration field 132. Event identifier field 122 provides a reference or name for the associated event 65. Market field 124 associates the underlying calendar event 65 with a market such as the United States. Inasmuch as some calendar events are associated with public holidays in some countries, the information contained in market field 124 is important for identifying where the underlying event 65 will impact calendar field 126 includes information describing which calendar the underlying event 65 references. For example, different calendars may be used within calendar events table 120 such as a Gregorian calendar, an Islamic calendar, a Persian calendar, and a Julian calendar. Location in calendar field 128 provides the relative placement of the underlying event 65 within the given calendar found in calendar field 126. For example, calendar event 65E is associated with the Persian New Year celebration according to event identifier 122E. This calendar event 65E begins on day one of the Persian calendar, as indicated by location in calendar field 128E and calendar field 126E, respectively. Thereafter, all dates are standardized into one format for use in generating a setting recommendation. For example, in an embodiment of the invention, non-Gregorian calendar dates are converted to Gregorian calendar dates using known formulas to translate the dates into one common format. Impact period start field 130 contains information regarding when the business impact associated with the calendar event 65 will begin to impact the underlying business. Information contained within impact period start field 130 works in conjunction with duration field 132 to provide information relating to when the impact will start and how long the impact will be felt. As an example, calendar event 65A relates to the Independence Day celebration of the United States, which falls on the first Monday of month nine. However, in accordance with impact period start field 130A, the impact from event 65A begins two days before the actual date of the event, and the impact is projected to last for three days, as indicated by duration field 132A.

Referring to FIG. 14, a piece of information, shown in FIG. 14 as 64D, may be generated by revenue management system 12 and calendar events table 120. Rather than apply the set of filters 62, as described above with respect to data sources 56, revenue management system 12 compares the market 60 provided by revenue management analyst 58 to the entries in market field 124 of calendar events table 120. A piece of information 64 is generated when revenue management system 12 finds a match between market 60 and an entry in market field 124. As described previously with respect to the market associated with a data source 56, any market found within market field 124 which includes market 60 therein, such as market Nice City within market France, is also considered a match. As such, the associated calendar event 65 generates a piece of information 64 from both an identical market match and an encompassing market match. As shown in FIG. 14, pieces of information 64 generated from calendar events 65 generally include the same information as a piece of information 64 generated from data sources 56 and filters 61. However, inasmuch as a piece of information 64 generated from calendar events table 120 does not include data source information, data source URL field 106D and piece of information URL field 108D are left unpopulated. Further, content field 104D is automatically populated with a standard message to reflect that the particular piece of information 64 was generated automatically from the calendar events table 120. After piece of information 64D is generated from revenue management system 12 and calendar events table 120, revenue management system 12 proceeds to use piece of information 64D as described above with other pieces of information 64.

A piece of information 64 may also be generated by revenue management system 12 when any article of a data source 56 includes the market 60 in the title of the article or in the body of the article. Thus, regardless of the various filter criterion and keywords required by the set of filters 62, revenue management system 12 may be configured to generate a piece of information 64 for each article which specifically references the market 60. This configuration ensures any articles on a data source 56 which references the market 60 is given further consideration by revenue management system 12 as there may be circumstances where an article provides important information regarding a future event or situation in the market 60 yet may not be captured by a filter 61.

After pieces of information 64 are generated through either data sources 56 or calendar events 65, revenue management system 12 compares each piece of information 64 with one another to determine whether any two or more pieces of information 64 generally forecast the same outcome or situation. Thereafter, revenue management system 12 merges pieces of information 64 two by two iteratively until there are no remaining pieces of information 64 that meet the merge criteria. For example, two different news articles may generate a piece of information 64 on an approaching winter storm in a particular area. While these two articles may provide different date ranges and different text, both articles refer to the same impending winter storm event which will disrupt travel. Once two similar pieces of information 64 are recognized, revenue management system 12 merges the two pieces of information 64 into one piece of information 64. This merged piece of information 64 contains the relevant information from both underlying pieces of information 64, which may have differences such as different data sources 56, different impact periods, or were generated from different filters 61.

FIG. 10 illustrates two different pieces of information 64, namely, piece of information 64A and piece of information 64B. The merging algorithm generally may include overlapping impact period information for each piece of information 64 as well as matching filter information relating to the underlying filter 61 which generated the pieces of information 64. To determine whether two pieces of information 64 have overlapping impact periods, revenue management system 12 compares the information in the date period fields 110 of each piece of information 64. For example, the impact period of piece of information 64A is "25DEC14" as indicated in impacted period field 110A. The impact period of piece of information 64B is "24DEC14-27DEC14" as indicated in impact period field 110B. Inasmuch as December 25, 2014, falls within the date range of December 24, 2014 to December 27, 2014, the impact periods of each piece of information 64 overlap.

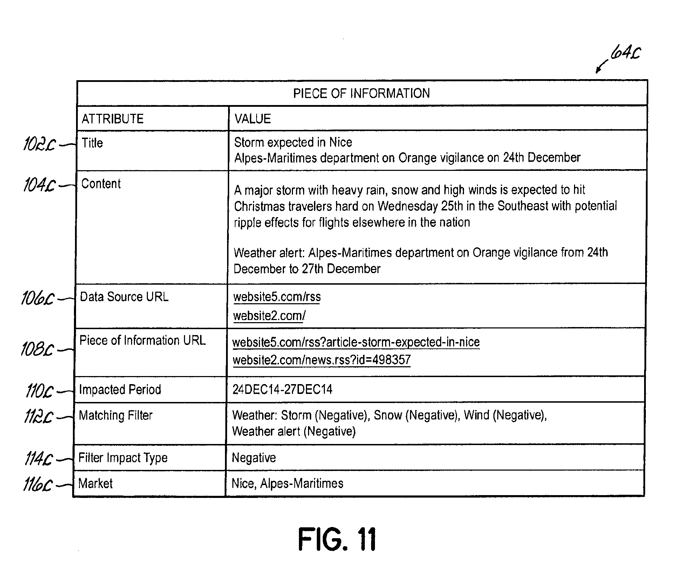

Next, the revenue management system 12 compares the matching filter fields 112 and the filter impact type field 114 between the pieces of information 64 to determine whether the filters 61 which generated each piece of information 64 include matching filter types and matching impact types. For example, piece of information 64A was generated by three filters having a filter type of "Weather", as indicated in matching filter field 112A. These weather filters are all associated with a "Negative" effect on the underlying business, as indicated in filter impact type field 114A. Similarly, piece of information 64B was generated by a filter having the filter type "Weather", as indicated in matching filter field 112B and the filter is associated with a "Negative" effect, as indicated in filter impact field 114B. Therefore, revenue management system 12 determines piece of information 64A and piece of information 64B are derived from the same news articles about impending event, an approaching winter weather storm. The revenue management system 12 merges piece of information 64A and piece of information 64B into a merged piece of information 64C, as shown in FIG. 11. As shown in FIGS. 10 and 11, the merging generally combines the values of title field 102, content field 104, data source URL field 106, piece of information URL field 108, matching filter field 112, and market field 116. The merging provides the union of the two dates or date ranges located in the impacted period fields 110. In piece of information 64C, the value in impacted period field 110C is 24DEC14-27DEC14 because this range is the union between 25DEC14 and 24DEC 14-27DEC 14. Also in piece of information 64C, the market field 116C includes the aggregated market values from market 116A of piece of information 64A and market 116B of piece of information 64B. Both markets are provided to allow a user or the analyst to view the information regarding which geographical areas are included in the piece of information.

After all pieces of information 64 are generated and merged, revenue management system 12 generates a setting recommendation 70 for each piece of information 64. Each setting recommendation 70 is provided to the revenue management analyst 58 in response to the original query for setting recommendations 70 based on a given market 60. To build a setting recommendation 70, revenue management system 12 retrieves the effects values in effect field 94 of the underlying filter(s) 61 that generated the piece of information 64 and uses these effect values to retrieve actions stored in action field 99 of a matching recommended action 68. For example, referring to FIGS. 7, 8, and 11, filter 61N is one filter used to generate piece of information 64C. Effect field 94N provides that filter 61N is associated with "Possible disruptions". The effect field 98B of recommended action 68B matches "Possible disruptions" and provides in actions field 99B that the recommended action to take to address possible disruptions is to (1) reduce the number of operating flights; and (2) inform the customer of possible disruptions.

Revenue management system 12 generates a setting recommendation 70 by entering information from the underlying piece of information 64, relevant filter(s) 61, and recommended action(s) 68 into a layout template. One embodiment of a layout template used by revenue management system 12 is illustrated in FIG. 12 as layout template 134. Layout template 134 includes placeholders for information such as the title of the underlying article and the impact period and is used to present the data to the revenue management analyst 58 in an aesthetically pleasing and easily readable format. Layout template 134 includes a title placeholder 136, a filter type placeholder 138, an impact type placeholder 140, an impact period placeholder 142, an effect placeholder 144, an action placeholder 146, a demand change placeholder 148, a historical event placeholder 150, and a reference placeholder 152. Revenue management system 12 populates the title placeholder 136 with the title of the underlying article and populates the filter type placeholder 138 and the impact type placeholder 140 with the filter type and the impact type of the filter 61 which generated the piece of information 64. Revenue management system 12 populates the effect placeholder 144 with the value of each effect field 98 for any recommended action 68 associated with the piece of information 64. Likewise, revenue management system 12 populates the action placeholder 146 with the value of each action field 99 for any recommended action 68 associated with the piece of information 64. If an entry in the action placeholder 146 is related to a change in demand, revenue management system 12 computes a forecast change in demand based on historical data and populates the demand change placeholder 148 with the computed change in demand. Thereafter, historical events placeholder 150 is populated with information relating to the historical events which the revenue management system 12 used to compute the change in demand. Finally, the reference placeholder 152 is populated with the web location of the underlying article(s) used to generate the associated piece of information 64.

As shown in FIG. 12, by using layout template 134 and populating the various placeholders of template 134 with relevant data, the revenue management analyst 58 receives a readable and readily understandable presentation of the underlying data generated by revenue management system 12. Setting recommendation 70 may be provided to revenue management analyst 58 in HTML, whereby the information contained in action placeholder 146 may be hyperlinks to the settings control panel of revenue management system 12 or a related system, such as inventory system 18 or reservation system 20. By clicking on the hyperlink, the revenue management analyst 58 may be directed to the particular system setting control where the suggested change or action may be implemented or actuated. Likewise, information relating to similar historical events in historical event placeholder 150 may include a hyperlink to provide the revenue management analyst 58 with the article or data which generated the historical comparison and change in demand prediction. The information provided in reference placeholder 152 may also include hyperlinks to the web site of the article and data source 56 that generated the piece of information 64 and setting recommendation 70. The revenue management analyst 58 may wish to manually review the underlying article for accuracy and to personally determine the value of the article with respect to the revenue management system 12.

Upon generation of a demand-based setting recommendation 70, revenue management system 12 quantifies and computes a forecast change in demand based on historical data and provides this forecast change in demand in the demand change placeholder 148 of the layout template 134. A demand-based setting recommendation 70 is one in which the underlying effect field 98 describes a temporary or permanent demand increase or decrease. For example, recommended action 68A includes the value of "Temporary demand increase" in events field 98A. Any setting recommendation 70 generated based on recommended action 68A is considered a demand-based setting recommendation 70.

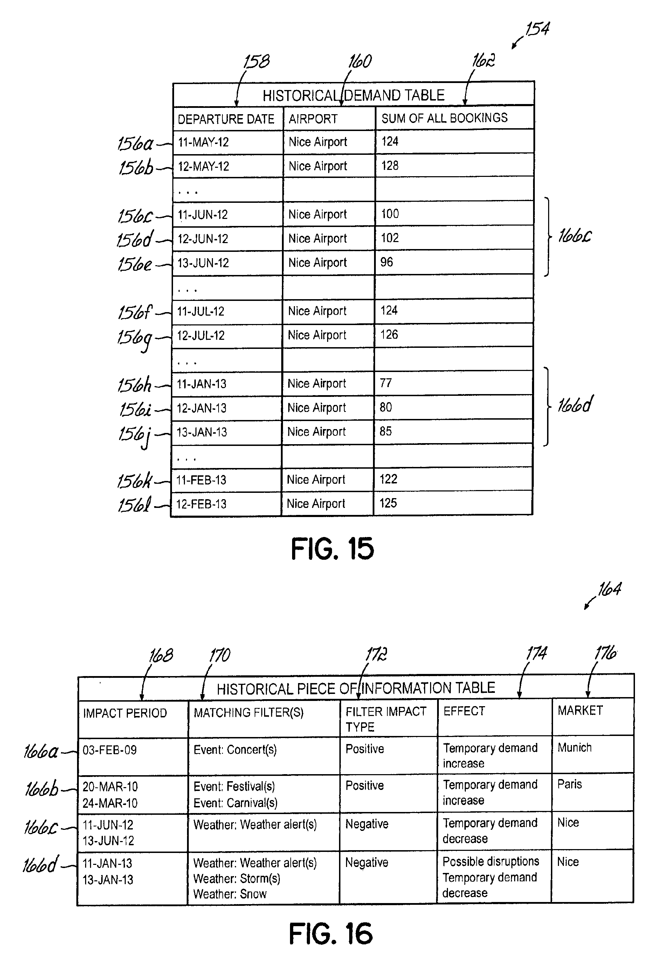

Referring to FIGS. 4, and 15, the revenue management system 12 may include the historical demand database 59 and may reference information stored therein to quantify and compute a forecast change in demand for use in a setting recommendation 70. The demand database 59 is configured to include a historical demand table 154 that stores and maintains booking summations representing the demand placed on a particular airport on a given day. A pseudo-database table representing historical demand table 154 is shown in FIG. 15. Historical demand table 154 may include multiple rows, with each row representing a booking summation 156. Each booking summation 156 generally represents the sum of all bookings conducted through the given airport on the given day. Booking information may be entered and maintained in the historical demand table 154 by the revenue management system 12. However, in the airline industry, booking information may be accumulated and stored in the historical demand table 154 by the departure control system 16, as the departure control system 16 monitors when a flight departs, a flight arrives, and the associated airports. Historical demand table 154 may be leveraged to dynamically determine the demand placed in a particular geographical region by selecting data based on a certain geographical region or a market. For example, for determining the historical demand for a region of France, all of the booking summations 156 for any airports located within the region may be selected from the historical demand table 154 and used to calculate historical demand for the region. As such, historical demand table 154 may include a geographical market field with values therein relating to the market, or a separate reference table may be constructed to correlate each airport with a market.

In the embodiment of the historical demand table 154 illustrated in FIG. 15, each booking summation 156 includes a departure date field 158, an airport field 160, and a sum of all bookings field 162. While "Nice Airport" is provided in the airport fields 160 shown in FIG. 15, historical demand table 154 includes a plurality of airports in the airport field 160. Further, historical demand table 154 may be customized to the underlying business of the revenue management system 12 and may include information regarding bus hubs or other travel related entities which experience fluctuations in demand over time. While each booking summation 156 is provided based on the granularity of one day, booking summations 156 may be provided using any other reasonable granularity, such as hourly bookings, weekly bookings, or any other preferred granularity. In the present example, each booking summation 156 represents the number of bookings made on a given day, either for arrival at the given airport or for departure at the given airport. While the exemplary historical demand table 154 illustrated in FIG. 15 provides a single column entry for the airport, other embodiments of the table may include a column for the arrival airport and a separate column for the departure airport.

Referring to FIGS. 4 and 16, the historical demand database 59 may be configured to further include a historical piece of information table 164 that stores and maintains expired or historical pieces of information for use in forecasting future demand requirements. After a particular piece of information 64 is no longer relevant, typically because the impact date has passed, the revenue management system 12 stores either the full piece of information 64 or a condensed version in the historical piece of information table 164. A pseudo-database table representing the historical piece of information table 164 is shown in FIG. 15. The historical piece of information table 164 may include multiple rows, with each row representing a historical piece of information 166. In the embodiment of the historical piece of information table 164 illustrated in FIG. 16, each historical piece of information 166 includes an impact period field 168, a matching filter field 170, a filter impact type field 172, an effect field 174, and a market field 176. When revenue management system 12 stores an expired piece of information 64 as a historical piece of information 166, the value of impact period field 110 is stored in impact period field 168, the value of matching filter field 112 is stored in matching filter field 170, the value of filter impact type field 114 is stored in filter impact type field 172, and the value of market 116 is stored in market field 176. The value of effect field 94 from the associated filter 61 is stored in effect field 174. Alternatively, effect field 174 may be omitted in some embodiments of historical piece of information 166 as this information is derivable from other information stored in historical piece of information 166.

Inasmuch as the data fields in the historical pieces of information 166 align with the data fields in the pieces of information 64, the values of these matching fields may be used to determine which historical pieces of information 166 match a piece of information 64 currently under consideration for a demand forecast. To find related historical pieces of information 166, revenue management system 12 searches for all historical pieces of information 166 in historical piece of information table 164 that were originally derived from the same filter 61 and associated with the same market 60 as those that generated the piece of information 64 under consideration. For example, if the piece of information 64 under consideration was derived from the "Event: Concert(s)" filter 611 for the market "Munich", revenue management system 12 searches for all historical pieces of information 166 which were originally derived from the "Event: Concert(s)" filter 611 for the market "Munich". As shown in FIG. 16, one historical piece of information 166 matches this search criterion, historical piece of information 166A.

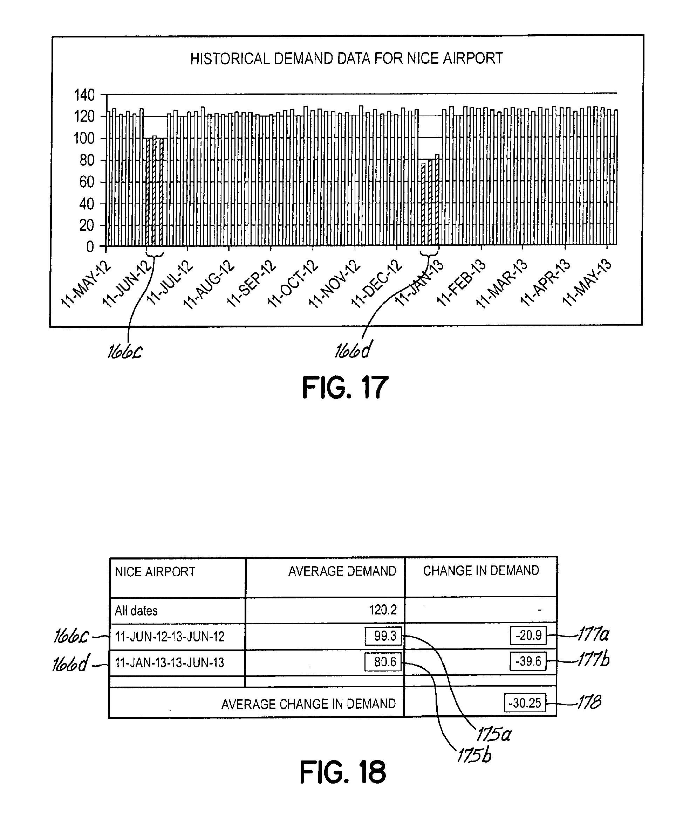

After the revenue management system 12 retrieves all matching historical pieces of information 166, revenue management system 12 cross-references the impact periods 168 associated with the selected historical pieces of information 166 with the departure dates 158 provided in the historical demand table 154 and for airports 160 located in the market 60. For example, historical piece of information 166C provides an impact period of 11-JUN-12 to 13-JUN-12 for the market of Nice, France. Revenue management system 12 correlates this information with booking summation 156C, booking summation 156D, and booking summation 156E, in the historical demand table 154. These three booking summations 156 provide the sum of all bookings on the impacted dates of the related historical piece of information 166. As shown in FIGS. 17 and 18, the sum of all booking information for the impacted dates relative to the surrounding dates may be used to forecast a change in demand for the piece of information 64 under consideration as the filter and market match. FIG. 17 incorporates the data provided in historical demand table 154 of FIG. 15 into a bar graph for illustrating the relative change in demand during the impact periods of historical piece of information 166C and historical piece of information 166D. FIG. 18 incorporates the relevant data provided in historical demand table 154 of FIG. 15 into a table showing an average demand 175 and an average demand change 177 during the impact periods of historical piece of information 166C and historical piece of information 166D, along with an overall average demand change 178 for all historical pieces of information 166 matching the piece of information 64 under consideration. The overall average demand change 178 of "30.25" represents the average change per day in the number of bookings for Nice Airport during historical pieces of information 166 which match the piece of information 64 under consideration.

The overall average demand change 178 may be provided in demand change placeholder 148 of setting recommendation 70 to provide the revenue management analyst 58 with a quantification and forecast of the potential change in demand based on similar historical events. Further, the overall average demand change 178 or any of the intermediate averages or base data regarding sum of booking changes may be modified or statistically processed further to provide relevant demand information to the revenue management analyst 58. Exponential smoothing may be applied to the time series data to assign exponentially decreasing weight to each historical piece of information 166 in an effort to smooth the data for more accurate forecasting. For example, the following function may be applied to assign exponential smoothing to the time series data extracted from historical demand table 154, where $\alpha$ is the smoothing factor and $0 < \alpha < 1$:

$$DemandModifier(\%) = \left( \frac{\sum_i \alpha^{\frac{Today-End(ImpactedPeriod_i)}{\max_i(Today-End(ImpactedPeriod_i))}} \cdot DemandModifier_i}{\sum_i \alpha^{\frac{Today-End(ImpactedPeriod_i)}{\max_i(Today-End(ImpactedPeriod_i))}}} - 1 \right) \cdot 100$$

With $\alpha \leq 1$ calibrated separately.

For example, with respect to Fig. 18, to calculate the final average change in demand with an exponential smoothing applied, the change in demand 177A may be reduced by 5% while the change in demand 177B may be increased by 5%. As such, the change in demand 177A may be smoothed to -19.9 (i.e. -20.9 x 0.95), while the change in demand 177B may be smoothed to -41.9 (i.e. -39.6 x 1.05). These adjusted changes in demand result in an average change in demand of -30.74, rather than the strict average of -30.25, because the later historical change is given more weight. In another example, data mining techniques or other statistical analysis may be applied if the data contained within historical demand table 154 is found to be too "noisy" or to remove seasonal effects which may skew the data.

In operation, the revenue management analyst 58 manipulates analyst computing device 14 to thereby provide market 60 to revenue management system 12. Revenue management system 12 is tasked to determine whether any settings related to revenue management system 12 may need updating or tweaking to take advantage of or to accommodate any potential future changes in the market 60. The revenue management analyst 58 may be interested in market 60 due to personal knowledge of events happening in the market 60 or market 60 may be one of several markets the revenue management analyst 58 is tasked to administer and analyze on a regular basis. Once revenue management system 12 receives a request for a setting recommendation 70 from revenue management analyst 58 and is provided a market 60, the revenue management system 12 compares market 60 to data contained within market field 80 of data source table 76 to determine whether a particular data source 56 provides information about market 60. In addition, revenue management system 12 may be configured to consider whether a market specified within market field 80 encompasses market 60. For example, if the revenue management analyst 58 provides a market 60 of Nice City, revenue management system 12 retrieves data source 56F, data source 56G, and data source 56H, as all of these data sources 56 include a matching market field 80 of "Nice City". In addition, revenue management system 12 also retrieves data source 56P as market field 80 includes "France" which encompasses Nice City, as well as data source 56D because market field 80 includes the market of the world.

Once revenue management system 12 retrieves the appropriate data sources 56 based on market 60, revenue management system 12 compares each article found within each data source 56 in the set of refined data sources 57 to each filter 61 contained within filter table 84. Each filter 61 includes a keyword field 88 which provides one or more keywords or filter criterion for use in determining whether particular filter 61 is applicable to the article. For example, data source 56G includes a filter criterion of "strike" or "strikes" in keyword field 88, written as "strike(s)". If an article located at one of the data sources 56 in the set of refined data sources 57 includes the word "strike" or "strikes", revenue management system 12 generates a piece of information 64 containing relevant information regarding the article, the filter 61, and the market 60.

In one embodiment of the invention, a subset of the set of filters 62 is applied to a particular data source 56 based on the value in language field 78 of data source 56 as well as the value in language field 90 of the filter table 84. Revenue management system 12 may selectively apply filters 61 where language field 90 matches language field 78. For example, filter 61A includes "English" in language field 98. Filter 61A is therefore not applied to data source 56B, as language field 78B includes the entry "French".

Each article which satisfies the criteria of a filter 61 generates a piece of information 64. Revenue management system 12 extracts relevant information such as the article title and the particular article URL and encapsulates this information into the piece of information 64. Revenue management system 12 further parses the article to extract date information regarding the article. However, inasmuch as the article may give dates or ranges in a relative format such as "Today, a storm is expected [...]", revenue management system 12 maps common relative date keywords into appropriate date ranges for use by revenue management system 12. As exemplified in the Table 1 below, common date keywords may be converted into a date range through a specified mapping. The generated date range is thereafter stored in the associated piece of information 64 for later use by revenue management system 12.

**Table 1**

| DATE KEYWORD | DATE RANGE |
|---|---|
| Today | [Current date, Current date] |
| Tomorrow | [Current date + 1 day, Current date + 1 day] |
| Next week | [Next Monday, Next Monday + 7 days] |
| Easter bank holidays | [14APR14, 21APR14] |

After each data source 56 is compared with each filter 61, one or more pieces of information 64 are generated. Thereafter, revenue management system 12 compares each piece of information 64 with one another to determine whether any two pieces of information 64 should be merged into one piece of information 64. To determine when to merge two pieces of information 64, revenue management system 12 compares the data contained therein, and those pieces of information 64 with overlapping impact date fields 110 and matching filter fields 112 are merged. To create one piece of information 64 from two pieces of information 64, the merging process accumulates the data from each field of each piece of information 64 into the merged piece of information 64.

For each piece of information 64 remaining after the merging routine is completed, revenue management system 12 compares the data located within matching filter 112 of the piece of information 64 and the associated effects field 94 of the filter table 84 to determine which recommended action 68 in actions table 96 is appropriate. Thereafter, the action information located in action field 99 of the associated recommended action 68 is incorporated along with the information contained in the underlying piece of information 64 into a setting recommendation 70. Revenue management system 12 extracts or transfers the information from the underlying piece of information 64 and the recommended action 68 and converts this data into the layout template 134 of setting recommendation 70. The layout template 134 includes various placeholders for receiving information supplied by the underlying piece of information 64 and the associated recommended action 68. If the recommended action 68 includes a demand-based change, revenue management system 12 retrieves matching historical pieces of information 166 from historical piece of information table 164 and compares impacted period field 168 of the extracted historical piece of information 166 to the same dates within historical demand table 154. The sum of all bookings 162 associated with the dates aligning with historical piece of information 166 is extracted and manipulated for use in forecasting a potential demand change with respect to the recommended action 68. After revenue management system 12 calculates this forecasted demand change, the demand change information is supplied within setting recommendation 70 for consideration by the revenue management analyst 58.

Once setting recommendations 70 are constructed based on the generated pieces of information 64, each setting recommendation 70 is transferred to revenue management analyst 58 as a response to the original query for information regarding the market 60. Each setting recommendation 70 appears on the display 15 of the computing device used by revenue management analyst 58 and may include hyperlinks or other mechanisms to allow the revenue management analyst 58 to quickly implement the recommended actions 70 or otherwise act upon the information contained therein. For example, if the setting recommendations 70 includes the recommended action of informing the customers are possible disruptions, the setting recommendation 70 may include a hyperlink which, when actuated, allows revenue management analyst 58 to send a mass e-mail to all the related customers informing the customers of possible disruptions.

Further, if the recommended action of the setting recommendation 70 relates to adjusting settings of the inventory system 18 or the reservation system 20, the setting recommendation 70 may include links to a control panel or a setting update screen associated with the inventory system 18 or the reservation system 20. As such, the revenue management analyst 58 may request setting recommendations 70 with respect to the market 60 and may be quickly provided with information collected from numerous disparate sources of data in an easily readable format and with historically derived forecasts for use in implementing the setting recommendation 70.

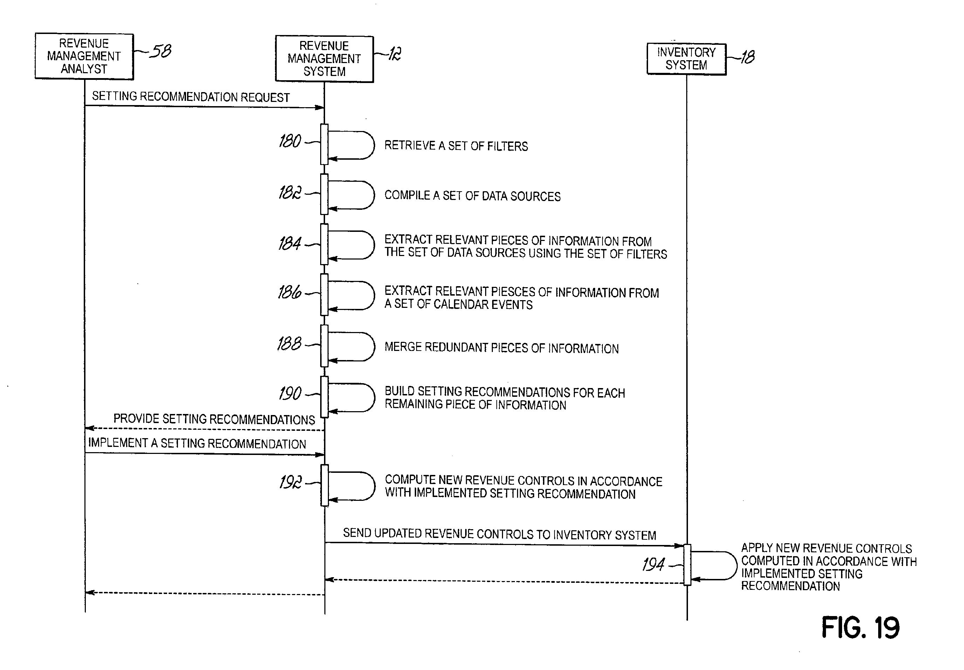

Referring to FIG. 19, the general process for constructing a setting recommendation 70 is shown and diagrammed therein. The process begins with the revenue management analyst 58 sending a recommendation requests along with a specified market to the revenue management system 12. Thereafter, a process step 180 is initiated, whereby the revenue management system 12 retrieves a set of filters from a filter database and proceeds to a process step 182. In process step 182, the revenue management system 12 compiles a set of data sources by extracting every data source stored in a data source database. The set of data sources is refined by filtering out those data sources not associated with either the specified market or a market which encompasses the specified market. For example, if the given market is Ohio, and a data source is associated with the United States, process step 182 retains the United States data source in the set of data sources because Ohio is a sub-market of the United States. After the appropriate set of data sources are extracted from the data source database and refined based on the specified market, the process step 182 proceeds to a process step 184.

In process step 184, the revenue management system 12 extracts relevant pieces of information from the set of data sources using the set of filters. Process step 184 compares the filter criterion of every filter with each article located at each data sources to determine whether the filter criterion is satisfied by the article. If the underlying article satisfies the filter criterion, the revenue management system 12 generates a piece of information containing information from the article and the filter. The revenue management system 12 iterates through each article located on each data source and applies each filter thereto to determine whether any article on any data source matches the filter criterion of any filter. The resulting pieces of information are references associated with the specified market which have particular characteristics which make the underlying article relevant for use in generating a setting recommendation. Thereafter, process step 184 proceeds to a process step 186. In process step 186, relevant pieces of information are extracted from a set of calendar events by revenue management system 12. The set of calendar events generally relates to any known future event associated with the specified market or a market encompassing the specified market. For example, China celebrates the Lantern Festival on the fifteenth day of the first month of the Chinese calendar each year. This is a known future event which may be relevant for providing a setting recommendation if the specified market is China or a region within the market of China. As such, any relevant calendar event generates a piece of information and process step 186 proceeds to a process step 188.

Process step 188 merges any redundant piece of information into a single piece of information. Inasmuch as every article on every data sources compared to every filter, redundant pieces of information may be numerous. Process step 188 collapses each piece of redundant information into a single piece of information representing a piece of data relevant for generating setting recommendation. Upon completion of process step 188, process step 188 continues to a process step 190. Process step 190 builds setting recommendations for each remaining piece of information. The setting recommendation includes information valuable to the revenue management analyst 58, such as whether a particular situation may have a negative or positive impact, as well as the impact dates.

After process step 190, each setting recommendation constructed via the previous process steps is provided to the revenue management analyst 58 as a response to the original query for setting recommendations. The revenue management analyst 58 may study each provided setting recommendation to determine whether to implement the setting recommendation. In a process step 192, the revenue management analyst 58 implements a setting recommendation by transferring information a selected setting recommendation to revenue management system 12. Revenue management system 12 computes new revenue controls in accordance with the implemented setting recommendation. Thereafter, revenue management system 12 passes the information regarding the updated revenue controls on to inventory system 18. In a process step 194, the inventory system 18 applies the new revenue controls computed in accordance with the implemented setting recommendation and thereafter notifies revenue management analyst 58 of the update.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions which are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In summary, the methodologies described herein can be characterized by the following clauses:

1. A method of generating a setting recommendation to configure a revenue management system for a travel market of a travel provider, the method comprising:

accessing a data source database to retrieve a plurality of data sources, wherein each data source in the plurality of data sources is associated with the travel market or a market encompassing the travel market in the data source database;

accessing a filter database to retrieve a filter from among a plurality of filters stored in the filter database, wherein each filter in the plurality of filters includes a filter criterion and a potential market effect;

performing an electronic search of the plurality of data sources to retrieve a plurality of articles associated with the plurality of data sources;

applying the filter to the plurality of articles to extract an information item from an article in the plurality of articles, wherein the article meets the filter criterion of the filter;

performing a database access to identify a recommended action associated with the potential market effect of the filter therein; and

generating a setting recommendation based at least in part on the information item, wherein the setting recommendation includes the recommended action.

2. The method of clause 1 further comprising:

in the revenue management system, determining an update for a revenue control, wherein the update is determined in accordance with the recommended action of the setting recommendation; and

in an inventory system, adjusting the revenue control in accordance with the update.

3. The method of clause 2 further comprising:

receiving an availability request at the inventory system; and
determining whether to accept or deny the availability request based at least in part on the adjusted revenue control.

4. The method of clause 3 further comprising:

generating the availability request from a reservation system; and
communicating the availability request from the reservation system to the inventory system.

5. The method of clause 4 further comprising:

coordinating communication between the revenue management system, the inventory system, and the reservation system with a global distribution system.

6. The method of clause 1 further comprising:

determining whether the potential market effect associated with the filter is a demand-based effect;
if the potential market effect associated with the filter is a demand-based effect, searching a historical demand database for a historical event associated with the travel market, the potential market effect, the filter, or a combination thereof;
determining a historical demand change associated with the historical event; and
providing the historical demand change in the setting recommendation.

7. The method of clause 6 further comprising:

monitoring an actual demand change associated with the information item in the travel market; and
storing the actual demand change in the historical demand database.

8. The method of clause 6 or clause 7 further comprising:

monitoring an inventory system to detect booking data associated with the travel market; and
in the revenue management system, maintaining the historical demand database by historicizing the booking data from the monitoring of the inventory system.

9. The method of any of clauses 6 to 8 further comprising:

monitoring a departure control system to detect departure data associated with the travel market; and
in the revenue management system, maintaining the historical demand database by historicizing the departure data from the monitoring of the departure control system.

10. The method of any of clauses 1 to 9 further comprising:

deducing an impact period associated with the information item; and
providing the impact period in the setting recommendation.

11. The method of clause 10 further comprising:

parsing the article for at least one date keyword pattern in a plurality of date keyword patterns; and
deducing the impacted period from the at least one date keyword pattern.

12. The method of clause 11 wherein the article is a first article, the filter is a first filter, the information item is a first information item, and the impact period is a first impact period, and wherein each filter in the plurality of filters further includes a filter type, further comprising:

retrieving a second filter from the filter database;
applying the second filter to the plurality of articles to extract a second information item from a second article in the plurality of articles, wherein the second article meets the filter criterion of the second filter;
parsing the second article for at least one date keyword pattern in the plurality of date keyword patterns;

deducing a second impacted period from the at least one date keyword pattern;

determining whether the filter type of the first filter and the filter type of the second filter are equivalent;
determining whether the first impact period and the second impact period overlap;
if the filter type of the first filter and the filter type of the second filter are equal and the first impact period overlaps the second impact period, merging the first information item and the second information item into a merged information item; and
providing the merged information item in the setting recommendation.

13. The method of clause 12 further comprising:

merging the first information item and the second information item by providing the union of the first impact period and the second impact period in the merged information item.

14. The method of clause 12 further comprising:

merging the first information item and the second information item by providing a reference to the first article and a reference to the second article in the merged information item.

15. The method of clause 14 wherein the reference to the first article is a first web address and the reference to the second article is a second web address.

16. The method of any of clauses 1 to 15 further comprising:

associating each filter in the plurality of filters with a filter language, wherein the filter language is one of a plurality of languages;
associating each data source in the plurality of data sources with a data source language,
wherein the data source language is one of the plurality of languages, and wherein the data source language is communicated by the data source; and
prior to accessing the plurality of articles associated with the plurality of data sources, limiting the plurality of data sources to data sources associated with the data source language that matches the filter language of the filter.

17. The method of any of clauses 1 to 16 wherein the filter criterion comprises at least one filter keyword.

18. The method of any of clauses 1 to 17 wherein the filter criterion comprises at least one market keyword.

19. The method of any of clauses 1 to 18 further comprising:

associating each data source in the plurality of data sources with a data source reference; and

providing the data source reference of the data source associated with the information item in the setting recommendation.

20. The method of clause 19 wherein the data source reference is a web address.

21. The method of any of clauses 1 to 20 further comprising:

associating each article in the plurality of articles with an article reference; and
providing the article reference of the article associated with the information item in the setting recommendation.

22. The method of clause 21 wherein the article reference is a web address.

23. The method of any of clauses 1 to 22 further comprising:

requesting, by a requestor, generation of the setting recommendation;
providing the setting recommendation to the requestor; and
implementing, by the requestor, the recommended action identified by the setting recommendation.

24. The method of clause 23 further comprising:

prior to requesting generation of the setting recommendation, configuring, by the requestor, one of the data sources in the plurality of data sources, the filter, or a combination thereof.

25. The method of clause 23 or clause 24 further comprising:

before implementing the recommended action of the setting recommendation, determining an impacted travel product associated with the recommended action, wherein the impacted travel product is affected by the implementation of the recommended action.

26. The method of clause 25, further comprising:

providing the impacted travel product to the user.

27. The method of clause 25 or clause 26 further comprising:

receiving a request to display information relating to the impacted travel product, wherein the request is received by the revenue management system; and
displaying information relating to the impacted travel product on a display screen.

28. The method of any of clauses 1 to 27 further comprising:

constructing a layout template, wherein the layout template includes a placeholder; and
providing the setting recommendation in the layout template format on a display screen, wherein the placeholder is replaced with the travel market, the filter, the filter criterion, the potential market effect, the information item, the article, the recommended action, or a combination thereof.

29. The method of any of clauses 1 to 11 wherein the information item is a first information item and the filter is a first filter, further comprising:

accessing the filter database to retrieve a second filter from among the plurality of filters stored in the filter database;
applying the second filter to the plurality of articles to extract a second information item from the article, wherein the article meets the filter criterion of the second filter;
comparing the first information item and the second information item to determine whether the first filter or the second filter is a selected filter; and
performing the database access to identify the recommended action associated with the potential market effect of the selected filter.

30. The method of clause 29 wherein the filter criterion of the first filter comprises a first filter keyword and the filter criterion of the second filter comprises a second filter keyword, further comprising:

determining whether the first filter keyword or the second filter keyword is referenced a greater number of times in the article, wherein the selected filter is the first filter if the first filter keyword is referenced a greater number of times in the article, and wherein the selected filter is the second filter if the second filter keyword is referenced a greater number of times in the article.

31. The method of any of clauses 1 to 16 wherein the filter criterion comprises a filter keyword and a threshold, and the article meets the filter criterion of the filter when the filter keyword is referenced in the article at least the threshold amount.

32. The method of any of clauses 12 to 14 further comprising:

merging the first information item and the second information item by providing the at least one date keyword pattern of the first impact period and the at least one date keyword pattern of the second impact period in the merged information item.

33. The method of any of clauses 12 to 14 further comprising:

   merging the first information item and the second information item by providing a first title and a second title in the merged information item, wherein the first title is associated with the first article, and wherein the second title is associated with the second article.

34. The method of any of clauses 12 to 14 further comprising:

   merging the first information item and the second information item by providing a first contents and a second contents in the merged information item, wherein the first contents are associated with the first article, and wherein the second contents are associated with the second article.

35. The method of any of clauses 1 to 34 further comprising:

   parsing each article in the plurality of articles to determine whether the article includes a reference to the travel market or a market encompassing the travel market; and
   in response to determining the article does not include a reference to the travel market or a market encompassing the travel market, removing the article from the plurality of articles to refine the plurality of articles.

36. The method of any of clauses 1 to 35 further comprising:

   for each article in the plurality of articles, determining whether the data source of the article is associated with the travel market or a market encompassing the travel market in the data source database; and
   in response to determining the data source of the article is not associated with the travel market or a market encompassing the travel market in the data source database, removing the article from the plurality of articles to refine the plurality of articles.

37. The method of any of clauses 12 to 14 wherein each filter in the plurality of filters further includes an impact type, and further comprising:

   determining whether the impact type of the first filter and the impact type of the second filter are equivalent; and
   if the impact type of the first filter and the impact type of the second filter are equivalent, merging the first information item and the second information item into the merged information item.

38. The method of clause 37 wherein the filter criterion of the first filter includes a first filter keyword and wherein the first filter keyword is referenced in the first article, the filter criterion of the second filter includes a second filter keyword, and the second filter keyword is referenced in the second article, and further comprising:

   determining whether the first filter keyword and the second filter keyword are equivalent; and
   if the first filter keyword and the second filter keyword are equivalent, merging the first information item and the second information item into the merged information item.

39. The method of any of clauses 1 to 11 wherein the article is a first article, the information item is a first information item, and the impact period is a first impact period, further comprising:

   applying the filter to the plurality of articles to extract a second information item from a second article in the plurality of articles, wherein the second article meets the filter criterion of the filter;
   parsing the second article for at least one date keyword pattern in the plurality of date keyword patterns;
   deducing a second impacted period from the at least one date keyword pattern;
   determining whether the first impact period and the second impact period overlap;
   if the first impact period overlaps the second impact period, merging the first information item and the second information item into a merged information item; and
   providing the merged information item in the setting recommendation.

40. The method of any of clauses 1 to 39 further comprising:

   accessing a calendar events database to retrieve a calendar event from among a plurality of calendar events stored in the calendar events database, wherein the calendar event is associated with the travel market or a market encompassing the travel market in the calendar events database and a potential market calendar effect;

performing a database access to identify a recommended action associated with the potential market calendar effect;

generating a setting recommendation based at least in part on the calendar event and the potential market calendar effect.

41. The method of any of clausse 1 to 40 wherein the travel market is the world.

42. A system for generating a setting recommendation to configure a revenue management system for a travel market of a travel provider, the system comprising:

a processor; and

a memory including instructions that, when executed by the processor, cause the system to:

access a data source database to retrieve a plurality of data sources, wherein each data source in the plurality of data sources is associated with the travel market or a market encompassing the travel market in the data source database;

access a filter database to retrieve a filter from among a plurality of filters stored in the filter database, wherein each filter in the plurality of filters includes a filter criterion and a potential market effect;

perform an electronic search of the plurality of data sources to retrieve a plurality of articles associated with the plurality of data sources;

apply the filter to the plurality of articles to extract an information item from an article in the plurality of articles, wherein the article meets the filter criterion of the filter;

perform a database access to identify a recommended action associated with the potential market effect of the filter therein; and

generate a setting recommendation based at least in part on the information item, wherein the setting recommendation includes the recommended action.

43. The system of clause 42 wherein the instructions, when executed by the processor, cause the system to perform the method of any of clauses 2 to 41.

44. A computer program being configured, when executed by a processor, to cause a computer to:

access a data source database to retrieve a plurality of data sources, wherein each data source in the plurality of data sources is associated with the travel market or a market encompassing the travel market in the data source database;

access a filter database to retrieve a filter from among a plurality of filters stored in the filter database, wherein each filter in the plurality of filters includes a filter criterion and a potential market effect;

perform an electronic search of the plurality of data sources to retrieve a plurality of articles associated with the plurality of data sources;

apply the filter to the plurality of articles to extract an information item from an article in the plurality of articles, wherein the article meets the filter criterion of the filter;

perform a database access to identify a recommended action associated with the potential market effect of the filter therein; and

generate a setting recommendation based at least in part on the information item, wherein the setting recommendation includes the recommended action.

45. The computer program of clause 44 being configured, when executed by the processor, to cause the computer to perform the method of any of clauses 2 to 41.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1. A method of generating a setting recommendation to configure a revenue management system for a travel market of a travel provider, the method comprising:

   accessing a data source database to retrieve a plurality of data sources, wherein each data source in the plurality of data sources is associated with the travel market or a market encompassing the travel market in the data source database;
   accessing a filter database to retrieve a filter from among a plurality of filters stored in the filter database, wherein each filter in the plurality of filters includes a filter criterion and a potential market effect;
   performing an electronic search of the plurality of data sources to retrieve a plurality of articles associated with the plurality of data sources;
   applying the filter to the plurality of articles to extract an information item from an article in the plurality of articles, wherein the article meets the filter criterion of the filter;
   performing a database access to identify a recommended action associated with the potential market effect of the filter therein; and
   generating a setting recommendation based at least in part on the information item,

   wherein the setting recommendation includes the recommended action.

2. The method of claim 1 further comprising:

   in the revenue management system, determining an update for a revenue control, wherein the update is determined in accordance with the recommended action of the setting recommendation; and
   in an inventory system, adjusting the revenue control in accordance with the update.

3. The method of claim 2 further comprising:

   receiving an availability request at the inventory system; and
   determining whether to accept or deny the availability request based at least in part on the adjusted revenue control.

4. The method of claim 3 further comprising:

   generating the availability request from a reservation system; and
   communicating the availability request from the reservation system to the inventory system.

5. The method of claim 4 further comprising:

   coordinating communication between the revenue management system, the inventory system, and the reservation system with a global distribution system.

6. The method of claim 1 further comprising:

   determining whether the potential market effect associated with the filter is a demand-based effect;
   if the potential market effect associated with the filter is a demand-based effect, searching a historical demand database for a historical event associated with the travel market, the potential market effect, the filter, or a combination thereof;
determining a historical demand change associated with the historical event; and
providing the historical demand change in the setting recommendation.

7. The method of claim 6 further comprising:

monitoring an actual demand change associated with the information item in the travel market; and
storing the actual demand change in the historical demand database.

8. The method of claim 6 or claim 7 further comprising:

monitoring an inventory system to detect booking data associated with the travel market; and
in the revenue management system, maintaining the historical demand database by historicizing the booking data from the monitoring of the inventory system.

9. The method of any of claims 6 to 8 further comprising:

monitoring a departure control system to detect departure data associated with the travel market; and
in the revenue management system, maintaining the historical demand database by historicizing the departure data from the monitoring of the departure control system.

10. The method of any of claims 1 to 9 further comprising:

deducing an impact period associated with the information item; and
providing the impact period in the setting recommendation.

11. The method of claim 10 further comprising:

parsing the article for at least one date keyword pattern in a plurality of date keyword patterns; and
deducing the impacted period from the at least one date keyword pattern.

12. The method of claim 11 wherein the article is a first article, the filter is a first filter, the information item is a first information item, and the impact period is a first impact period, and wherein each filter in the plurality of filters further includes a filter type, further comprising:

retrieving a second filter from the filter database;
applying the second filter to the plurality of articles to extract a second information item from a second article in the plurality of articles, wherein the second article meets the filter criterion of the second filter;
parsing the second article for at least one date keyword pattern in the plurality of date keyword patterns;
deducing a second impacted period from the at least one date keyword pattern;
determining whether the filter type of the first filter and the filter type of the second filter are equivalent;
determining whether the first impact period and the second impact period overlap;
if the filter type of the first filter and the filter type of the second filter are equal and the first impact period overlaps the second impact period, merging the first information item and the second information item into a merged information item; and
providing the merged information item in the setting recommendation.

13. The method of claim 12 further comprising:

merging the first information item and the second information item by providing the union of the first impact period and the second impact period in the merged information item or by providing a reference to the first article and a reference to the second article in the merged information item.

14. A system for generating a setting recommendation to configure a revenue management system for a travel market of a travel provider, the system comprising:

a processor; and

a memory including instructions that, when executed by the processor, cause the system to:

access a data source database to retrieve a plurality of data sources, wherein each data source in the plurality of data sources is associated with the travel market or a market encompassing the travel market in the data source database;
access a filter database to retrieve a filter from among a plurality of filters stored in the filter database, wherein each filter in the plurality of filters includes a filter criterion and a potential market effect;
perform an electronic search of the plurality of data sources to retrieve a plurality of articles associated with the plurality of data sources;
apply the filter to the plurality of articles to extract an information item from an article in the plurality of articles, wherein the article meets the filter criterion of the filter;
perform a database access to identify a recommended action associated with the potential market effect of the filter therein; and
generate a setting recommendation based at least in part on the information item, wherein the setting recommendation includes the recommended action.

15. A computer program that, when executed by a processor, causes a computer to:

access a data source database to retrieve a plurality of data sources, wherein each data source in the plurality of data sources is associated with the travel market or a market encompassing the travel market in the data source database;
access a filter database to retrieve a filter from among a plurality of filters stored in the filter database, wherein each filter in the plurality of filters includes a filter criterion and a potential market effect;
perform an electronic search of the plurality of data sources to retrieve a plurality of articles associated with the plurality of data sources;
apply the filter to the plurality of articles to extract an information item from an article in the plurality of articles, wherein the article meets the filter criterion of the filter;
perform a database access to identify a recommended action associated with the potential market effect of the filter therein; and
generate a setting recommendation based at least in part on the information item, wherein the setting recommendation includes the recommended action.

**FIG. 1**

**FIG. 2**

FIG. 3

EP 3 065 093 A1

FIG. 4

| NAME | URL | | LANGUAGE | MARKET |
|------|-----|---|----------|--------|
| | | DATA SOURCE TABLE | | |
| 1 | website1.com | | English | Australia |
| 2 | website2.com | | French | France |
| 3 | website3.com | | German | Germany |
| 4 | website4.com | | English | World |
| 5 | website5.com | | French | Nice Airport |
| 6 | website6.com | | French | Nice City |
| 7 | website7.com | | French | Nice City |
| 8 | website8.com | | French | Nice City |

FIG. 5

| NAME | URL | | LANGUAGE | MARKET |
|------|-----|---|----------|--------|
| | | REFINED DATA SOURCE TABLE | | |
| 2 | website2.com | | French | France |
| 4 | website4.com | | English | World |
| 5 | website5.com | | French | Nice Airport |
| 6 | website6.com | | French | Nice City |
| 7 | website7.com | | French | Nice City |
| 8 | website8.com | | French | Nice City |

FIG. 6

| | FILTER TYPE | KEYWORD | LANGUAGE | IMPACT TYPE | EFFECT |
|---|---|---|---|---|---|
| | | | *FILTER TABLE* | | |
| | *86* | *88* | *90* | *92* | *94* |
| *61a* | Event | Festival(s) | English | Positive | Temporary demand increase |
| *61b* | Event | Festival(s) | French | Positive | Temporary demand increase |
| *61c* | Event | Carnival(s) | English | Positive | Temporary demand increase |
| *61d* | Event | Strike(s) | English | Negative | Possible disruptions |
| *61e* | Event | Attack(s,ing,ed) | English | Negative | Possible disruptions Temporary demand increase |
| *61f* | Event | Revolution(s) | English | Negative | Possible disruptions Temporary demand increase |
| *61g* | Event | Revolution(s) | French | Negative | Possible disruptions Temporary demand increase |
| *61h* | Event | Conflict(s) | English | Negative | Possible disruptions Temporary demand increase |
| *61i* | Event | Concert(s) | English | Positive | Temporary demand increase |
| *61j* | Event | Concert(s) | French | Positive | Temporary demand increase |
| *61k* | Event | Show(s) | English | Positive | Temporary demand increase |
| *61l* | Competition | New route(s) | English | Negative | Permanent demand decrease |
| *61m* | Competition | New destinations(s) | English | Negative | Permanent demand decrease |
| *61n* | Weather | Storm(s) | English | Negative | Possible disruptions |
| *61o* | Weather | Wind(s) | English | Negative | Possible disruptions |
| *61p* | Weather | Snow | English | Negative | Possible disruptions |
| *61q* | Weather | Volcano(s) ashes | English | Negative | Possible disruptions Temporary demand increase |
| *61r* | Weather | Weather alert(s) | French | Negative | Possible disruptions Temporary demand increase |

*84*

# FIG. 7

## ACTIONS TABLE

| EFFECT | ACTION |
|--------|--------|
| Temporary demand increase | Define a Forecast influence Rule |
| Possible disruptions | Reduce the number of operating flights<br>Inform customers of possible disruptions |

## FIG. 8

## PIECE OF INFORMATION

| ATTRIBUTE | VALUE |
|-----------|-------|
| Title | |
| Content | |
| Data Source URL | |
| Piece of Information URL | |
| Impacted Period | |
| Matching Filter | |
| Filter Impact Type | |
| Market | |

## FIG. 9

| SETTINGS<br>Recommendation 1 | TITLE: Storm expected in Nice, Alpes-Maritimes departmant in Orange vigilance on 24th December |
|---|---|
| | TEXT:<br><br>Through the analysis of WEATHER the system identified that a NEGATIVE impact is expected for period 24DEC14-27DEC14 the following action should be taken:<br>    - POSSIBLE DISRUPTION(S) is likely to occur<br>    - TEMPORARY DEMAND decrease is likely to occur<br>Consider taking the following actions:<br>    - Reduce the number of operating flights<br>    - Inform the customer of possible disruptions<br>    - Define a Forcast Influence Rule<br>Historical Data shows that for similar historical events the demand changed by -14%<br>Similar Historical events:<br>    - Bad Weather condition in Alpes maritimes this week<br>    - Weekly report for Nice<br><br>REFERENCES:<br>    - website5.com/rss?article-storm-expected-in-nice<br>    - website2.com/news.rss?id=498357 |

## FIG. 12

64a

| PIECE OF INFORMATION | |
|---|---|
| ATTRIBUTE | VALUE |
| Title | Storm expected in Nice |
| Content | A major storm with heavy rain, snow and high winds is expected to hit Christmas travelers hard on Wednesday 25th in the Southeast with potential ripple effects for flights elsewhere in the nation |
| Data Source URL | website5.com/rss |
| Piece of Information URL | website5.com/rss?article-storm-expected-in-nice |
| Impacted Period | 25DEC14 |
| Matching Filter | Weather: Storm (Negative), Snow (Negative), Wind (Negative) |
| Filter Impact Type | Negative |
| Market | Nice |

102a
104a
106a
108a
110a
112a
114a
116a

64b

| PIECE OF INFORMATION | |
|---|---|
| ATTRIBUTE | VALUE |
| Title | Alpes-Maritimes department on Orange vigilance on 24th December |
| Content | Weather alert: Alpes-Maritimes department on Orange vigilance from 24th December to 27th December |
| Data Source URL | website2.com/ |
| Piece of Information URL | website2.com/news.rss?id=498357 |
| Impacted Period | 24DEC14-27DEC14 |
| Matching Filter | Weather: Weather alert (Negative) |
| Filter Impact Type | Negative |
| Market | Alpes-Maritimes |

102b
104b
106b
108b
110b
112b
114b
116b

# FIG. 10

64C

| PIECE OF INFORMATION | |
|---|---|
| ATTRIBUTE | VALUE |
| Title | Storm expected in Nice<br>Alpes-Maritimes department on Orange vigilance on 24th December |
| Content | A major storm with heavy rain, snow and high winds is expected to hit Christmas travelers hard on Wednesday 25th in the Southeast with potential ripple effects for flights elsewhere in the nation<br><br>Weather alert: Alpes-Maritimes department on Orange vigilance from 24th December to 27th December |
| Data Source URL | website5.com/rss<br>website2.com/ |
| Piece of Information URL | website5.com/rss?article-storm-expected-in-nice<br>website2.com/news.rss?id=498357 |
| Impacted Period | 24DEC14-27DEC14 |
| Matching Filter | Weather: Storm (Negative), Snow (Negative), Wind (Negative), Weather alert (Negative) |
| Filter Impact Type | Negative |
| Market | Nice, Alpes-Maritimes |

102C
104C
106C
108C
110C
112C
114C
116C

# FIG. 11

_120_

|          | 122 | 124 | 126 | 128 | 130 | 132 |

| | | | CALENDAR EVENTS TABLE | | | |
|---|---|---|---|---|---|
| EVENT | MARKET | CALENDAR | LOCATION IN CALENDAR | IMPACT PERIOD START | DURATION |
| US Independence Day | United States | Gregorian | First Monday of month 9 | 2 days before | 3 days |
| Yom Kippur | World | Hebrew | Day 10 of Tishri month | 0 days before | 4 days |
| Pentecost | World | Ecclesiastic | Easter + 49 days | 2 days before | 3 days |
| Birth of the Prophet | Morocco, Algeria | Islamic | Day 12 of month 3 | 0 days before | 1 day |
| Persian New Year | Iran, Azerbaijan, Afghanistan, Georgia, Iraq Kyrgyzstan, Kyrgyzstan, Russia, Syria, Tajikistan, Turkey, Turkmenistan, Uzbekisyan | Persian | Day 1 | 1 day before | 2 days |
| Lantern Festival | China | Chinese | Day 15 of month 1 | 0 days before | 1 day |
| Dragon Festival | China | Chinese | Day 5 of month 5 | 0 days before | 1 day |
| Birthday of Rama | World | Hindu | Chaitra 9 | 1 day before | 2 days |
| Birthday of Krishna | World | Hindu | Sravana 23 | 1 day before | 2 days |

65a, 65b, 65c, 65d, 65e, 65f, 65g, 65h, 65i

## FIG. 13

_64d_

| PIECE OF INFORMATION | |
|---|---|
| ATTRIBUTE | VALUE |
| Title | Birth of the Prophet |
| Content | This is a known event automatically integrated into the system |
| Data Source URL | |
| Piece of Information URL | |
| Impacted Period | 03JAN15-03JAN15 |
| Matching Filter | Event: Calendar computed event - Positive |
| Filter Impact Type | Positive |
| Market | Morocco |

102d, 104d, 106d, 108d, 110d, 112d, 114d, 116d

## FIG. 14

_154_

_158_ _160_ _162_

| HISTORICAL DEMAND TABLE | | |
|---|---|---|
| DEPARTURE DATE | AIRPORT | SUM OF ALL BOOKINGS |
| _156a_ 11-MAY-12 | Nice Airport | 124 |
| _156b_ 12-MAY-12 | Nice Airport | 128 |
| . . . | | |
| _156c_ 11-JUN-12 | Nice Airport | 100 |
| _156d_ 12-JUN-12 | Nice Airport | 102 |
| _156e_ 13-JUN-12 | Nice Airport | 96 |
| . . . | | |
| _156f_ 11-JUL-12 | Nice Airport | 124 |
| _156g_ 12-JUL-12 | Nice Airport | 126 |
| . . . | | |
| _156h_ 11-JAN-13 | Nice Airport | 77 |
| _156i_ 12-JAN-13 | Nice Airport | 80 |
| _156j_ 13-JAN-13 | Nice Airport | 85 |
| . . . | | |
| _156k_ 11-FEB-13 | Nice Airport | 122 |
| _156l_ 12-FEB-13 | Nice Airport | 125 |

_166c_

_166d_

## FIG. 15

_164_

_168_ _170_ _172_ _174_ _176_

| HISTORICAL PIECE OF INFORMATION TABLE | | | | |
|---|---|---|---|---|
| IMPACT PERIOD | MATCHING FILTER(S) | FILTER IMPACT TYPE | EFFECT | MARKET |
| _166a_ 03-FEB-09 | Event: Concert(s) | Positive | Temporary demand increase | Munich |
| _166b_ 20-MAR-10 24-MAR-10 | Event: Festival(s) Event: Carnival(s) | Positive | Temporary demand increase | Paris |
| _166c_ 11-JUN-12 13-JUN-12 | Weather: Weather alert(s) | Negative | Temporary demand decrease | Nice |
| _166d_ 11-JAN-13 13-JAN-13 | Weather: Weather alert(s) Weather: Storm(s) Weather: Snow | Negative | Possible disruptions Temporary demand decrease | Nice |

## FIG. 16

HISTORICAL DEMAND DATA FOR NICE AIRPORT

166c    166d

## FIG. 17

| NICE AIRPORT | AVERAGE DEMAND | CHANGE IN DEMAND |
|---|---|---|
| All dates | 120.2 | - |
| 11-JUN-12-13-JUN-12 | 99.3 | -20.9 |
| 11-JAN-13-13-JUN-13 | 80.6 | -39.6 |
| | | |
| AVERAGE CHANGE IN DEMAND | | -30.25 |

166c —
166d —

177a
177b
178

175a
175b

## FIG. 18

FIG. 19

EP 3 065 093 A1

Europäisches
Patentamt

European
Patent Office

Office européen
des brevets

**EUROPEAN SEARCH REPORT**

Application Number

EP 15 29 0060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/238356 A1 (TORII MANABU [US] ET AL) 12 September 2013 (2013-09-12) * the whole document * | 1-15 | INV. G06Q10/02 G06Q50/14 |
| X | US 2014/283055 A1 (ZAHRAN JACK I [US]) 18 September 2014 (2014-09-18) * the whole document * | 1-15 | |
| A | EP 2 530 634 A1 (AMADEUS SAS [FR]) 5 December 2012 (2012-12-05) * the whole document * | 1-15 | |
| A | US 2015/039581 A1 (JOHN ROJI [US] ET AL) 5 February 2015 (2015-02-05) * the whole document * | 1-15 | |
| A | US 2013/254711 A1 (SIEVERT STEFAN [US] ET AL) 26 September 2013 (2013-09-26) * the whole document * | 1-15 | |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 17 August 2015 | Falierou, Christina |

EPO FORM 1503 03.82 (P04C01)

**EP 3 065 093 A1**

## ANNEX TO THE EUROPEAN SEARCH REPORT
## ON EUROPEAN PATENT APPLICATION NO.

EP 15 29 0060

17-08-2015

| Patent document cited in search report | | Publication date | Patent family member(s) | | Publication date |
|---|---|---|---|---|---|
| US 2013238356 | A1 | 12-09-2013 | US | 2013238356 A1 | 12-09-2013 |
| | | | WO | 2012061813 A1 | 10-05-2012 |
| US 2014283055 | A1 | 18-09-2014 | US | 2014283055 A1 | 18-09-2014 |
| | | | WO | 2014144402 A1 | 18-09-2014 |
| EP 2530634 | A1 | 05-12-2012 | AU | 2012265140 A1 | 18-04-2013 |
| | | | EP | 2530634 A1 | 05-12-2012 |
| | | | US | 2012310706 A1 | 06-12-2012 |
| | | | WO | 2012163596 A1 | 06-12-2012 |
| US 2015039581 | A1 | 05-02-2015 | NONE | | |
| US 2013254711 | A1 | 26-09-2013 | NONE | | |

EPO FORM P0459

For more details about this annex : see Official Journal of the European Patent Office, No. 12/82